# EUROPEAN PATENT APPLICATION

(11) **EP 4 142 374 A1**
(43) Date of publication of application: **01.03.2023**
(21) Application number: 20932329.4
(22) Date of filing: 07.10.2020
(51) Int. Cl.: H04W 48/08

(54) **TERMINAL AND COMMUNICATION METHOD**

(30) Priority: 23.04.2020 JP 2020076914
(71) Applicant: NTT DOCOMO, INC., Chiyoda-Ku Tokyo 100-6150 (JP)
(72) Inventor: TAKAHASHI, Hideaki, Tokyo 100-6150 (JP)
(74) Representative: Hoffmann Eitle
(86) International application number: PCT/JP2020/038056
(87) International publication number: WO 2021/215029

(57) **Abstract**

A terminal includes a receiving unit that receives system information from a cell; a control unit that acquires a common configuration for the cell and a common configuration for uplink that are included in the system information; and a transmitting unit that performs uplink transmission in the cell by applying the common configuration for the cell and the common configuration for the uplink to the uplink transmission, wherein, in a case where the cell supports a standalone operation, the control unit assumes that the common configuration for the cell and the common configuration for the uplink are mandatory fields.

## Description

### TECHNICAL FIELD

The present invention relates to a terminal and a communication method in a radio communication system.

### BACKGROUND ART

For NR (New Radio) (which is also referred to as "5G") that is a successor system to LTE (Long Term Evolution), technology has been discussed that satisfies requirements, such as those of large capacity system, a high data transmission rate, low latency, simultaneous connection of multiple terminals, low cost, and power saving (e.g., Non-Patent Document 1). 5G is a mobile communication system that supports a high frequency band, such as that of millimeter waves higher than 10 GHz. Ultra-high-speed wireless data communications of several Gbps class can be achieved using a frequency bandwidth of a several hundred MHz class, which is significantly wider than a conventional system, such as LTE.

For operating an NR system, dual connectivity communication can be provided by an LTE base station that operates as a master node and an NR base station that operates as a secondary node. In addition, a standalone operation is possible in which communication is provided to a terminal by an NR base station alone (e.g., Non-Patent Document 2 and Non-Patent Document 3).

### Related Art Document

### [Non-Patent Document]

Non-Patent Document 1: 3GPP TS 38.300 V15.8.0(2019-12)
Non-Patent Document 2: 3GPP TS 38.101-1 V15.8.0(2019-12)
Non-Patent Document 3: 3GPP TS 38.101-2 V15.8.0(2019-12)

### SUMMARY OF THE INVENTION

### [PROBLEM TO BE SOLVED BY THE INVENTION]

During standalone operation of an NR system, a terminal that camps on a single NR cell is required to obtain necessary system information from the NR cell. However, there is a case in which system information that can be obtained in an NR cell does not include mandatory information.

The present invention has been made in view of the above-described point, and an object is to specify a camping-on operation for standalone operation of a RAT (Radio Access Technology).

### [MEANS FOR SOLVING THE PROBLEM]

According to the disclosed technology, there is provided a terminal including a receiving unit that receives system information from a cell; a control unit that acquires a common configuration for the cell and a common configuration for uplink that are included in the system information; and a transmitting unit that performs uplink transmission in the cell by applying the common configuration for the cell and the common configuration for the uplink to the uplink transmission, wherein, in a case where the cell supports a standalone operation, the control unit assumes that the common configuration for the cell and the common configuration for the uplink are mandatory fields.

### [ADVANTAGE OF THE INVENTION]

According to the disclosed technology, a camping on operation can be specified for standalone operation of a RAT (Radio Access Technology).

### BRIEF DESCRIPTION OF DRAWINGS

Fig. 1 is a diagram illustrating an example (1) of a configuration of a radio communication system according to an embodiment of the present invention.
Fig. 2 is a diagram illustrating an example (2) of a configuration of a radio communication system according to an embodiment of the present invention.
Fig. 3 is a sequence diagram illustrating an example of camping on a cell according to an embodiment of the present invention.
Fig. 4 is a flowchart illustrating an example of camping on a cell according to an embodiment of the present invention.
Fig. 5 is a diagram illustrating a modified example (1) of a specification according to an embodiment of the present invention.
Fig. 6 is a diagram illustrating a modified example (2) of a specification according to an embodiment of the present invention.
Fig. 7 is a diagram illustrating a modified example (3) of a specification according to an embodiment of the present invention.
Fig. 8 is a diagram illustrating a modified example (4) of a specification according to an embodiment of the present invention.
Fig. 9 is a diagram illustrating a modified example (5) of a specification according to an embodiment of the present invention.
Fig. 10 is a diagram illustrating a modified example (6) of a specification according to an embodiment of the present invention.
Fig. 11 is a diagram illustrating an example of a functional configuration of a base station 10 according to an embodiment of the present invention.
Fig. 12 is a diagram illustrating an example of a functional configuration of a terminal 20 according to an embodiment of the present invention.
Fig. 13 is a diagram illustrating an example of a hardware configuration of the base station 10 or the terminal 20 according to an embodiment of the present invention.

### [EMBODIMENTS OF THE INVENTION]

In the following, embodiments of the present invention are described by referring to the drawings. The embodiments described below are merely examples, and embodiments to which the present invention is applied are not limited to the embodiments described below.

In operating a radio communication system according to an embodiment of the present invention, existing technology is used as appropriate. Here, the existing technology is, for example, the existing LTE. However, the existing technology is not limited to the existing LTE. The term "LTE" as used in this specification has a broad meaning including LTE-Advanced and a scheme subsequent to LTE-Advanced (e.g., NR), unless as otherwise specified.

In the embodiments of the present invention described below, terms used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. This is for convenience of description, and signals, functions, etc., similar to these may be referred to by other names. The above-described terms in NR correspond to NR-SS, NR-PSS, NR-SSS, NR-PBCH, NR-PRACH, NR-PDCCH, NR-PDSCH, NR-PUCCH, NR-PUSCH, etc., respectively. However, even if a signal is used for NR, the signal is not always specified as "NR-."

In the embodiments of the present invention, a duplex method may be a Time Division Duplex (TDD) method, a Frequency Division Duplex (FDD) method, or any other method (e.g., Flexible Duplex, etc.).

In the embodiments of the present invention, "configuring" or "specifying" a radio parameter, etc., may be "pre-configuring" a predetermined value for a radio parameter, etc., configuring a value indicated by a base station 10 or a terminal 20 for a radio parameter, etc., or pre-configuring a value for a radio parameter by a technical specification.

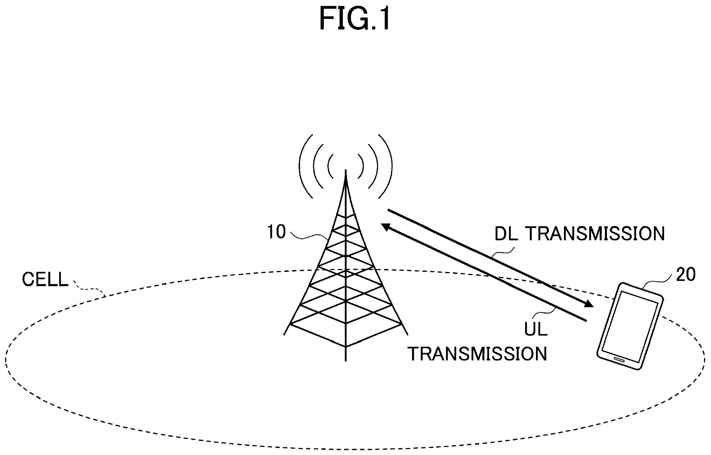

FIG. 1 is a diagram illustrating an example (1) of a configuration of a radio communication system according to an embodiment of the present invention. As illustrated in Fig. 1, the base station 10 and the terminal 20 are included. In Fig. 1, one base station 10 and one terminal 20 are illustrated. However, this is merely an example, and there may be a plurality of base stations 10 and a plurality of terminals 20. Here, the terminal 20 may be referred to as "user equipment."

The base station 10 is a communication device that provides one or more cells and that performs radio communication with the terminal 20. A physical resource of a radio signal may be defined in terms of a time domain and a frequency domain. A time domain may be defined in terms of a slot or an OFDM symbol. A frequency domain may be defined in terms of a sub-band, a subcarrier, or a resource block.

As illustrated in Fig. 1, the base station 10 transmits control information or data in DL (Downlink) to the terminal 20 and receives control information or data in UL (Uplink) from the terminal 20. Both the base station 10 and the terminal 20 are capable of beamforming to transmit and receive signals. Furthermore, both the base station 10 and the terminal 20 may also apply MIMO (Multiple Input Multiple Output) communications to the DL or UL. Furthermore, both the base station 10 and the terminal 20 may perform communication via a SCell (Secondary Cell) and a PCell (Primary Cell) by CA (Carrier Aggregation).

The terminal 20 is a communication device provided with a radio communication function, such as a smartphone, a cellular phone, a tablet, a wearable terminal, a communication module for M2M (Machine-to-Machine), etc. As illustrated in FIG. 1, the terminal 20 utilizes various communication services provided by a radio communication system by receiving control information or data in DL from the base station 10 and transmitting control information or data in UL to the base station 10.

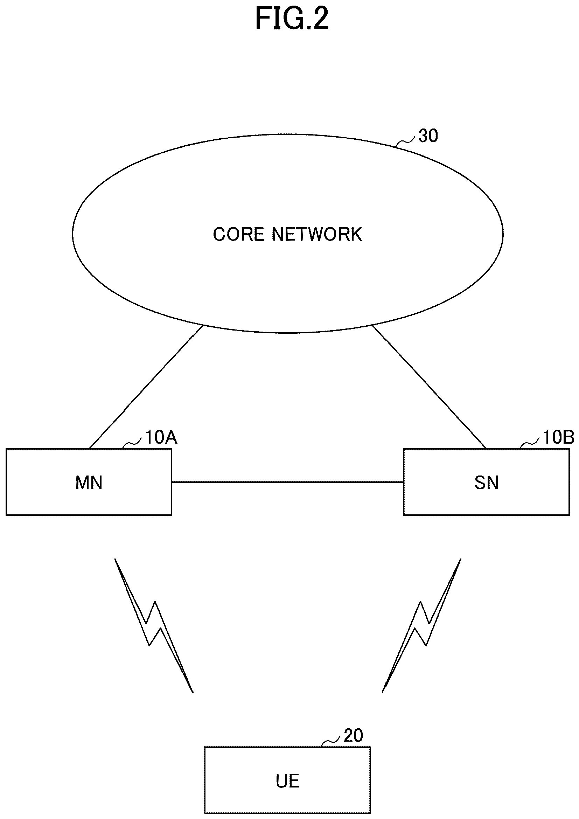

Fig. 2 is a diagram illustrating an example (2) of a configuration of a radio communication system according to an embodiment of the present invention. Fig. 2 illustrates an example of a configuration of a radio communication system for executing NR-DC (NR-Dual connectivity). As illustrated in Fig. 2, there are a base station 10A that is a MN (Master Node) and a base station 10B that is a SN (Secondary Node). The base station 10A and the base station 10B are connected to a core network 30. The terminal 20 communicates with both base station 10A and base station 10B. Here, a radio communication system based on EN-DC (E-UTRA NR DC) may be configured in which an LTE base station is the MN and an NR base station is the SN.

A cell group provided by the base station 10A that is the MN is referred to as a MCG (Master Cell Group), and a cell group provided by the base station 10B that is the SN is referred to as a SCG (Secondary Cell Group). As for the operation described below, a configuration for standalone operation of Fig. 1 is mainly assumed.

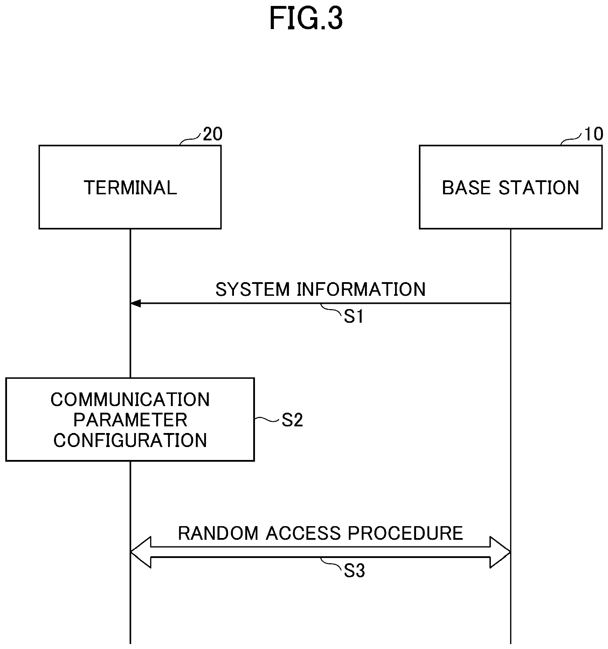

Fig. 3 is a sequence diagram illustrating an example of camping on a cell according to an embodiment of the present invention. At step S1, the terminal 20 receives system information from the base station 10 through a cell. For example, system information may include a MIB (Master Information Block) and a SIB1 (System Information Block 1). The MIB is system information transmitted on a PBCH. The SIB1 may include information related to whether a cell is accessible, scheduling of any other system information, a radio resource configuration common for UE, access barring, etc.

At step S2, the terminal 20 configures a communication parameter based on the received system information. For example, a frequency band, a band width, etc., used for downlink or uplink are configured. If connection to a cell is not barred in the system information, the terminal 20 may camp on the cell.

If necessary, as illustrated in step S3, the terminal 20 and the base station 10 may execute a random access procedure. For example, the terminal 20 may apply a communication parameter configured at step S2 based on the system information to execute uplink transmission. After completion of the random access procedure, the terminal 20 and the base station 10 may execute usual communication.

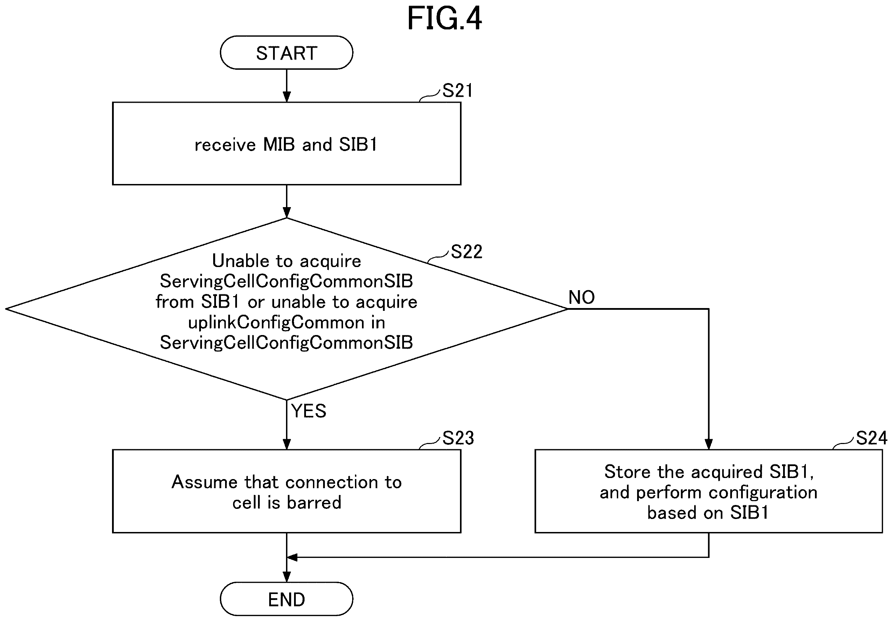

Fig. 4 is a flowchart for illustrating an example of camping on a cell according to an embodiment of the present invention. The detailed operation at step S2 illustrated in FIG. 3 is described using FIG. 4. Fig. 4 illustrates an operation of the terminal 20 when a cell, to which connection by the terminal 20 is attempted, supports a standalone operation.

At step S21, the terminal 20 receives a MIB and SIB1 from a cell provided by the base station 10. Subsequently, the terminal 20 determines whether the terminal 20 is unable to acquire an information element "ServingCellConfigCommonSIB" from the SIB1, or determines whether the terminal 20 is unable to acquire an information element "uplinkConfigCommon" in the "ServingCellConfigCommonSIB". When the terminal 20 is unable to acquire at least one of them (YES at S22), the process proceeds to step S23, and when the terminal is able to acquire both of them (NO at S22) the process proceeds to step S24.

At step S23, the terminal 20 assumes that connection to the cell from which the MIB and the SIB1 are received is barred. At step S24, the terminal 20 stores the obtained SIB1, and executes configuration based on the SIB1.

Note that the "ServingCellConfigCommonSIB" is used for configuring a parameter specific to a serving cell in a SIB1. The "uplinkConfigCommon" provides a common parameter for uplink in the cell. That is, in a case where the terminal 20 is unable to acquire at least one of the "ServingCellConfigCommonSIB" and the "uplinkConfigCommon", the terminal 20 is unable to configure a common parameter for uplink.

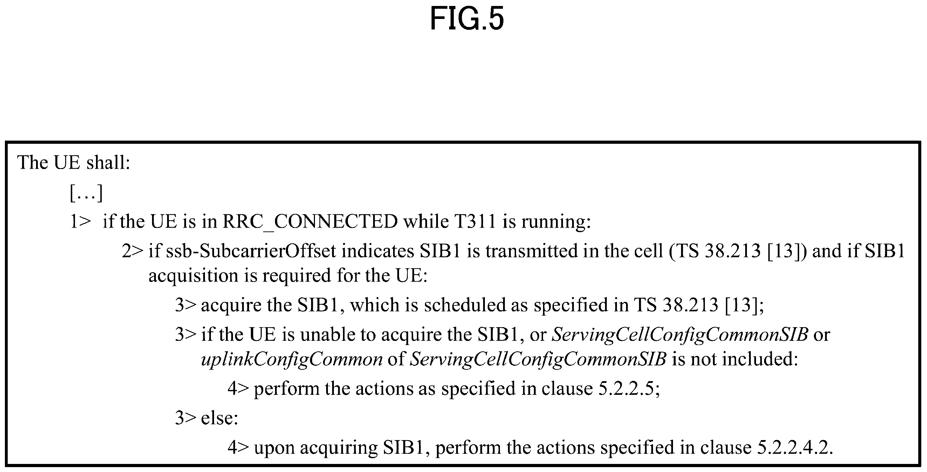

FIG. 5 is a diagram illustrating a modified example (1) of a technical specification according to an embodiment of the present invention. As illustrated in FIG. 5, in a case where the terminal 20 is unable to acquire the information element "ServingCellConfigCommonSIB", or in a case where the terminal 20 is unable to acquire the information element "uplinkConfigCommon" in the "ServingCellConfigCommonSIB", the terminal 20 may execute an operation for a case in which the terminal 20 is unable to acquire mandatory system information (clause 5.2.2.5).

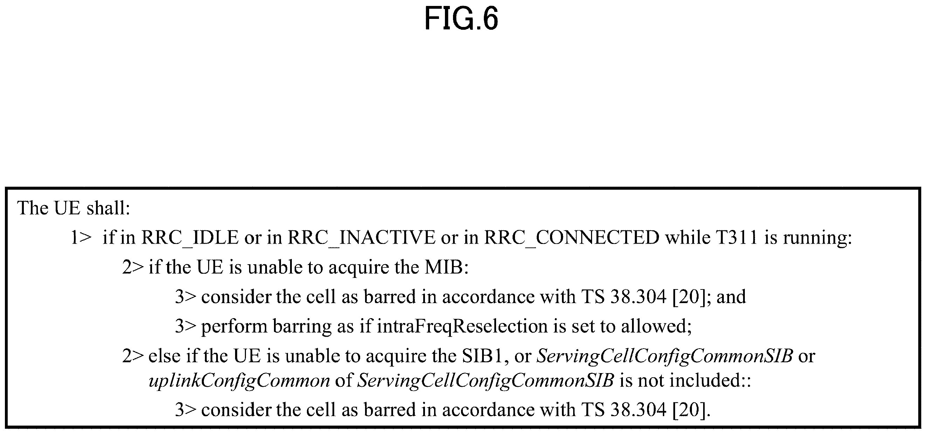

Fig. 6 is a diagram illustrating a modified example (2) of a technical specification according to an embodiment of the present invention. As illustrated in Fig. 6, in a case where the terminal 20 is unable to acquire the information element "ServingCellConfigCommonSIB", or in a case where the terminal 20 is unable to acquire the information element "uplinkConfigCommon" of the "ServingCellConfigCommonSIB", the terminal 20 may assume that connection to the cell is barred.

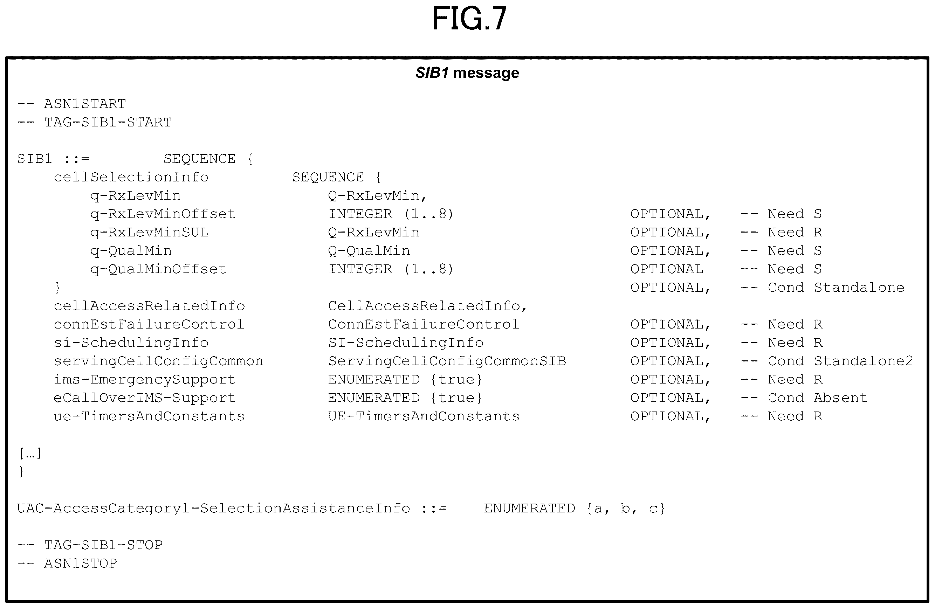

FIG. 7 is a diagram illustrating a modified example (3) of a specification according to an embodiment of the present invention. As illustrated in FIG. 7, the information element "ServingCellConfigCommonSIB" may be configured in accordance with a condition "Standalone2."

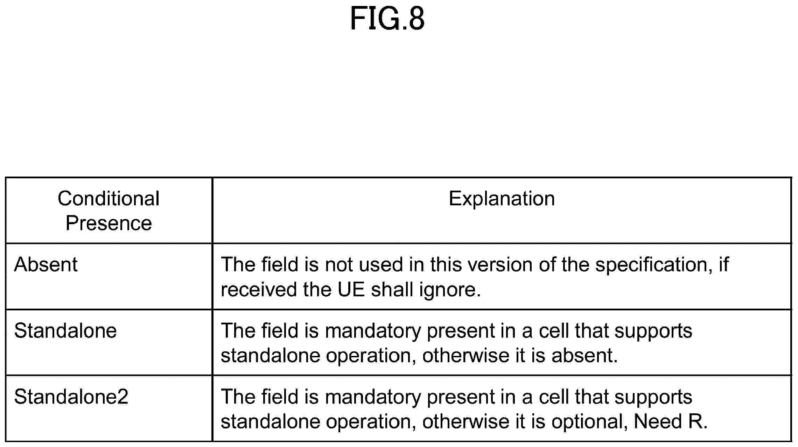

Fig. 8 is a diagram illustrating a modified example (4) of a technical specification according to an embodiment of the present invention. As illustrated in Fig. 8, the condition "Standalone2" illustrated in Fig. 7 may be a mandatory field for a standalone operation, and may be an optional field to which a condition "Need R" is applied for a case other than the standalone operation. That is, the information element "ServingCellConfigCommonSIB" may be a mandatory field for a standalone operation. Here, the condition "Need R" is a parameter for which a field is maintained, and, when the field is empty, the terminal 20 releases a current parameter.

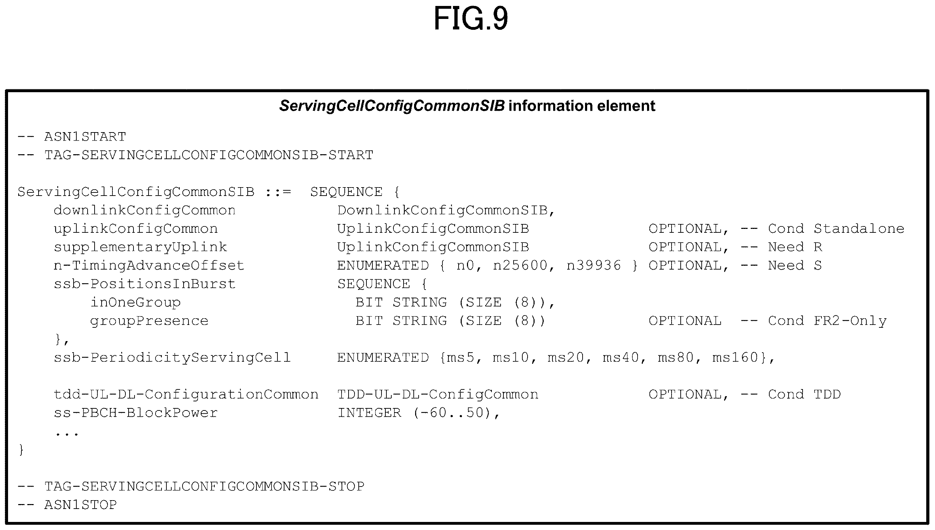

Fig. 9 is a diagram illustrating a modified example (5) of a specification according to an embodiment of the present invention. As illustrated in Fig. 9, the information element "uplinkConfigCommon" may be configured in accordance with a condition "Standalone."

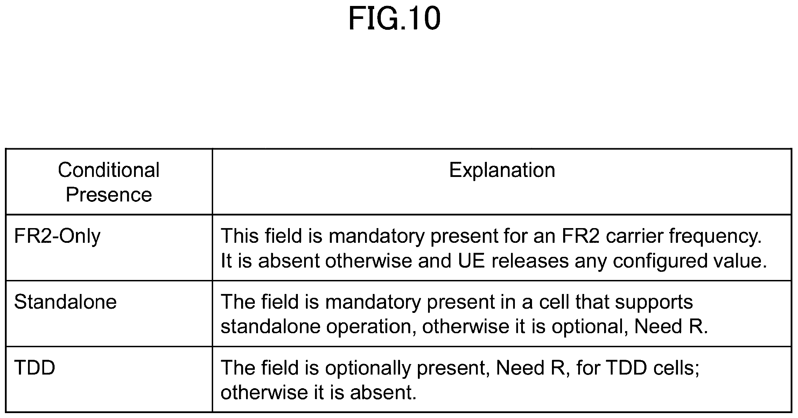

Fig. 10 is a diagram illustrating a modified example (6) of a specification according to an embodiment of the present invention. As illustrated in Fig. 10, the condition "Standalone" illustrated in Fig. 9 may be a mandatory field for a standalone operation, and may be an optional field to which a condition "Need R" is applied for a case other than the standalone operation. That is, the information element "uplinkConfigCommon" may be a mandatory field for a standalone operation. Here, the condition "Need R" is a parameter for which a field is maintained, and, when the field is empty, the terminal 20 releases a current parameter.

According to the above-described embodiments, during a standalone operation of an NR base station, the terminal 20 can reliably obtain mandatory system information for establishing a connection.

That is, a camping-on operation can be specified for a standalone operation of a RAT (Radio Access Technology).

### (Functional configuration)

Next, an example of a functional configuration of the base station 10 and the terminal 20 for performing the processes and operations described above is described. The base station 10 and terminal 20 include functions for implementing the embodiments described above. However, each of the base stations 10 and the terminal 20 may alternatively include only a part of the functions in the embodiments.

### <Base station 10>

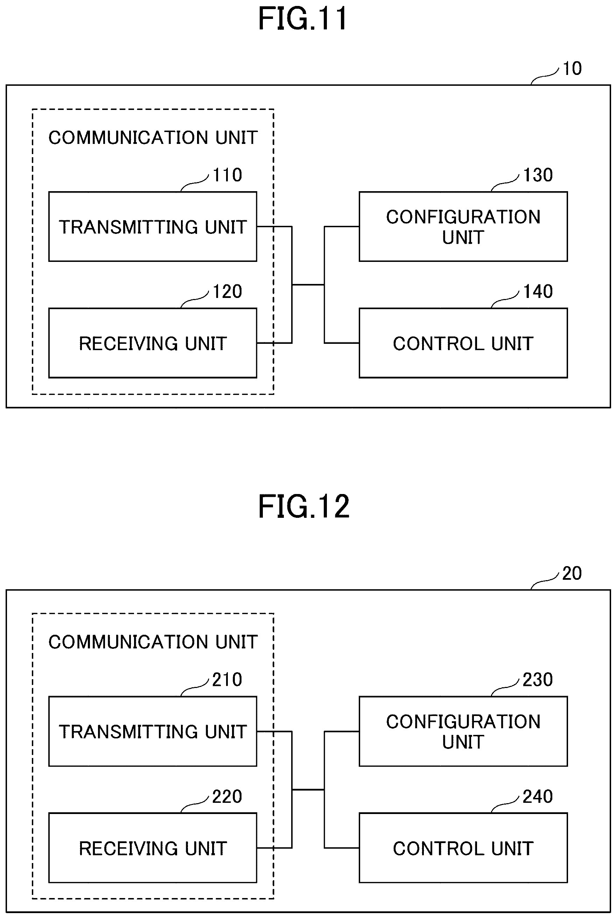

FIG. 11 is a diagram illustrating an example of a functional configuration of the base station 10 according to an embodiment of the present invention. As illustrated in FIG. 11, the base station 10 includes a transmitting unit 110; a receiving unit 120; a configuration unit 130; and a control unit 140. The functional configuration illustrated in FIG. 11 is only one example. If the operation according to the embodiments of the present invention can be executed, the functional division and the name of the functional units may be any division and names.

The transmitting unit 110 is provided with a function for generating a signal to be transmitted to the terminal 20 and transmitting the signal through radio. The transmitting unit 110 transmits a message between network nodes to the other network nodes. The receiving unit 120 includes a function for wirelessly receiving various signals transmitted from the terminal 20 and retrieving, for example, information of a higher layer from the received signals. The transmitting unit 110 has a function to transmit NR-PSS, NR-SSS, NR-PBCH, DL/UL control signals, reference signals, etc., to the terminal 20. The receiving unit 120 receives a message between network nodes from other network nodes. The transmitting unit 110 and the receiving unit 120 may be collectively referred to as a communication unit.

The configuration unit 130 stores preconfigured configuration information and various configuration information to be transmitted to the terminal 20 in a storage device, and reads out the configuration from the storage device, if necessary. The content of the configuration information is, for example, system information, etc.

As described in the embodiments, the control unit 140 performs control related to transmission of system information. Furthermore, the control unit 140 performs control related to random access. A functional unit related to signal transmission in the control unit 140 may be included in the transmitting unit 110, and a functional unit related to signal reception in the control unit 140 may be included in the receiving unit 120.

### <Terminal 20>

FIG. 12 is a diagram illustrating an example of a functional configuration of a terminal 20 according to an embodiment of the present invention. As illustrated in FIG. 12, the terminal 20 includes a transmitting unit 210; a receiving unit 220; a configuration unit 230; and a control unit 240. The functional configuration illustrated in FIG. 12 is only one example. If the operation according to the embodiments of the present invention can be performed, the functional division and the name of the functional units may be any division and names.

The transmitting unit 210 is provided with a function for creating a transmission signal from transmission data and transmitting the transmission signal through radio. The receiving unit 220 receives various signals through radio and retrieves higher layer signals from the received physical layer signals. The receiving unit 220 has a function to receive NR-PSS, NR-SSS, NR-PBCH, DL/UL/SL control signals, etc., transmitted from the base station 10. For example, the transmitting unit 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), etc., to the other terminal 20 as D2D communication, and the receiving unit 220 receives PSCCH, PSSCH, PSDCH, PSBCH, etc., from the other terminal 20. The transmitting unit 210 and the receiving unit 220 may be collectively referred to as a communication unit.

The configuration unit 230 stores, in a storage device, various types of configuration information received from the base station 10 or the terminal 20 by the receiving unit 220, and reads out the configuration information, if necessary. The configuration unit 230 also stores preconfigured configuration information. The content of the configuration information is, for example, information required for camping on or for random access.

The control unit 240 performs control for camping on and random access, as described in the embodiments. A functional unit related to signal transmission in the control unit 240 may be included in the transmitting unit 210, and a functional unit related to signal reception in the control unit 240 may be included in the receiving unit 220.

### (Hardware configuration)

Block diagrams (FIG. 11 and FIG. 12) used in the description of the above embodiments illustrate blocks of functional units. These functional blocks (components) are implemented by any combination of at least one of hardware and software. In addition, an implementation method of each function block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

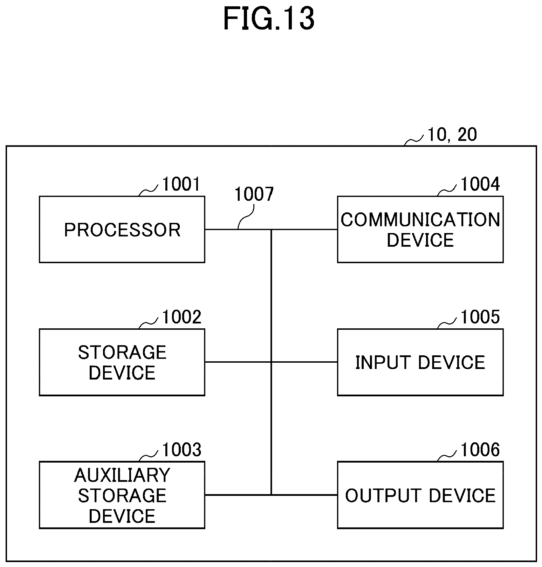

For example, the base station 10, the terminal 20, etc., according to the embodiments of the present invention may function as a computer that performs processing of the radio communication method according to the present disclosure. FIG. 13 is a diagram illustrating an example of a hardware configuration of the base station 10 and the terminal 20 according to an embodiment of the present disclosure. The base station 10 and the terminal 20 may each be configured as a computer device including, physically, a processor 1001, a storage device 1002, an auxiliary storage device 1003, a communication device 1004, an input device 1005, an output device 1006, a bus 1007, etc.

In the following description, the term "device" can be read as a circuit, a device, a unit, etc. The hardware configuration of the base station 10 and terminal 20 may be configured to include one or more of the devices depicted in the figure, or may be configured without some devices.

Each function of the base station 10 and the terminal 20 is implemented by loading predetermined software (program) on hardware, such as the processor 1001, the storage device 1002, etc., so that the processor 1001 performs computation and controls communication by the communication device 1004, and at least one of reading and writing of data in the storage device 1002 and the auxiliary storage device 1003.

The processor 1001, for example, operates an operating system to control the entire computer. The processor 1001 may be configured with a central processing unit (CPU: Central Processing Unit) including an interface with a peripheral device, a control device, a processing device, a register, etc. For example, the above-described control unit 140, control unit 240, etc., may be implemented by the processor 1001.

Additionally, the processor 1001 reads a program (program code), a software module, data, etc., from at least one of the auxiliary storage device 1003 and the communication device 1004 to the storage device 1002, and executes various processes according to these. As the program, a program is used which causes a computer to execute at least a part of the operations described in the above-described embodiments. For example, the control unit 140 of the base station 10 illustrated in FIG. 11 may be implemented by a control program that is stored in the storage device 1002 and that is operated by the processor 1001. Furthermore, for example, the control unit 240 of the terminal 20 illustrated in FIG. 12 may be implemented by a control program that is stored in the storage device 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The storage device 1002 is a computer readable recording medium, and, for example, the storage device 1002 may be formed of at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory (main storage device), etc. The storage device 1002 may store a program (program code), a software module, etc., which can be executed for implementing the communication method according to one embodiment of the present disclosure.

The auxiliary storage device 1003 is a computer readable storage medium and may be formed of, for example, at least one of an optical disk, such as a CD-ROM (Compact Disc ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, etc. The above-described recording medium may be, for example, a database including at least one of the storage device 1002 and the auxiliary storage device 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, etc. The communication device 1004 may be configured to include, for example, a high frequency switch, a duplexer, a filter, a frequency synthesizer, etc., to implement at least one of frequency division duplex (FDD: Frequency Division Duplex) and time division duplex (TDD: Time Division Duplex). For example, a transmitting/receiving antenna, an amplifier unit, a transceiver unit, a transmission line interface, etc., may be implemented by the communication device 1004. The transceiver unit may be implemented so that the transmitting unit and the receiving unit are physically or logically separated.

The input device 1005 is an input device (e.g., a keyboard, a mouse, a microphone, a switch, a button, a sensor, etc.) that receives an external input. The output device 1006 is an output device (e.g., a display, speaker, LED lamp, etc.) that performs output toward outside. The input device 1005 and the output device 1006 may be configured to be integrated (e.g., a touch panel).

Each device, such as the processor 1001 and the storage device 1002, is also connected by the bus 1007 for communicating information. The bus 1007 may be formed of a single bus or may be formed of different buses between devices.

The base station 10 and the terminal 20 may each include hardware, such as a microprocessor, a digital signal processor (DSP: Digital Signal Processor), an ASIC (Application Specific Integrated Circuit), a PLD (Programmable Logic Device), and a FPGA (Field Programmable Gate Array), which may implement some or all of each functional block. For example, processor 1001 may be implemented using at least one of these hardware components.

### (Conclusion of the embodiments)

As described above, according to the above-described embodiments, there is provided a terminal including a receiving unit that receives system information from a cell; a control unit that acquires a common configuration for the cell and a common configuration for uplink that are included in the system information; and a transmitting unit that performs uplink transmission in the cell by applying the common configuration for the cell and the common configuration for the uplink to the uplink transmission, wherein, in a case where the cell supports a standalone operation, the control unit assumes that the common configuration for the cell and the common configuration for the uplink are mandatory fields.

According to the above-described configuration, the terminal 20 can reliably obtain mandatory system information for establishing a connection during a standalone operation of an NR base station. That is, a camping-on operation can be specified for a standalone operation of a RAT (Radio Access Technology).

In a case where the cell supports the standalone operation and where the control unit is unable to acquire at least one of the common configuration for the cell and the common configuration for the uplink from the system information, the control unit may assume that connection to the cell is barred. According to this configuration, during a standalone operation of an NR base station, if mandatory system information for establishing a connection is not acquired, the terminal 20 can reduce power consumption by refraining from attempting to connecting to the cell.

In a case where the cell supports the standalone operation and where the control unit acquires the common configuration common for the cell and the common configuration for the uplink from the system information, the control unit may store the system information and may execute a configuration process, based on the system information. According to this configuration, the terminal 20 can establish a connection based on mandatory system information for establishing the connection, during a standalone operation of an NR base station.

In a case where the cell does not support the standalone operation, the control unit may assume that the common configuration for the cell and the common configuration for the uplink are optional fields. According to this configuration, in a case where an NR base station is not operated in standalone, the terminal 20 can assume that a field that is not mandatory is an optional field.

Furthermore, according to the embodiments of the present invention, there is provided a communication method executed by a terminal. The communication method includes: receiving system information from a cell; acquiring a common configuration for the cell and a common configuration for uplink that are included in the system information; transmitting uplink transmission in the cell, while applying the configuration common for the cell and the configuration common for the uplink to the uplink transmission, wherein, when the cell supports a standalone operation, the control step assumes that the configuration common for the cell and the configuration common for the uplink are mandatory fields.

According to the above-described configuration, the terminal 20 can reliably obtain mandatory system information for establishing a connection during a standalone operation of an NR base station. Namely, a camping-on operation can be specified for a standalone operation of a RAT (Radio Access Technology).

### (Supplemental Embodiments)

While the embodiments of the present invention are described above, the disclosed invention is not limited to the embodiments, and those skilled in the art will appreciate various alterations, modifications, alternatives, substitutions, etc. Descriptions are provided using specific numerical examples to facilitate understanding of the invention, but, unless as otherwise specified, these values are merely examples and any suitable value may be used. Classification of the items in the above descriptions is not essential to the present invention, and the items described in two or more items may be used in combination as needed, or the items described in one item may be applied (unless inconsistent) to the items described in another item. The boundaries of functional units or processing units in the functional block diagram do not necessarily correspond to the boundaries of physical components. An operation by a plurality of functional units may be physically performed by one component or an operation by one functional unit may be physically executed by a plurality of components. For the processing procedures described in the embodiment, the order of processing may be changed as long as there is no inconsistency. For the convenience of the description of the process, the base station 10 and the terminal 20 are described using functional block diagrams, but such devices may be implemented in hardware, software, or a combination thereof. Software operated by a processor included in the base station 10 in accordance with embodiments of the present invention and software operated by a processor included in the terminal 20 in accordance with embodiments of the present invention may be stored in a random access memory (RAM), a flash memory (RAM), a read-only memory (ROM), an EPROM, an EEPROM, a register, a hard disk (HDD), a removable disk, a CD-ROM, a database, a server, or any other suitable storage medium, respectively.

Notification of information is not limited to the aspects/embodiments described in the disclosure, and notification of information may be made by another method. For example, notification of information may be implemented by physical layer signaling (e.g., DCI (Downlink Control Information), UCI (Uplink Control Information), higher layer signaling (e.g., RRC (Radio Resource Control) signaling, MAC (Medium Access Control) signaling, broadcast information (MIB (Master Information Block), SIB (System Information Block))), or other signals or combinations thereof. RRC signaling may be referred to as an RRC message, for example, which may be an RRC connection setup message, an RRC connection reconfiguration message, etc.

The aspects/embodiments described in this disclosure may be applied to a system using at least one of LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (Registered Trademark), GSM (Registered Trademark), CDMA2000, UMB (Ultra Mobile Broadband), IEEE 802.11 (Wi-Fi (Registered Trademark)), IEEE 802.16 (WiMAX (Registered Trademark)), IEEE 802.20, UWB (Ultra-WideBand), Bluetooth (Registered Trademark), any other appropriate system, and a next generation system extended based on theses. Additionally, a plurality of systems may be combined (e.g., a combination of at least one of LTE and LTE-A and 5G) to be applied.

The processing procedures, sequences, flow charts, etc. of each aspect/embodiment described in this disclosure may be reordered, provided that there is no contradiction. For example, the methods described in this disclosure present elements of various steps in an exemplary order and are not limited to the particular order presented.

The particular operation described in this specification to be performed by base station 10 may be performed by an upper node in some cases. It is apparent that in a network consisting of one or more network nodes having base stations 10, various operations performed for communicating with the terminal 20 may be performed by at least one of the base stations 10 and network nodes other than the base stations 10 (e.g., MME or S-GW can be considered, however, the network node is not limited to these). The case is exemplified above in which there is one network node other than the base station 10. However, the network node other than the base station 10 may be a combination of multiple other network nodes (e.g., MME and S-GW) .

The information or signals described in this disclosure can be output from a higher layer (or lower layer) to a lower layer (or higher layer). It may be input and output through multiple network nodes.

Input and output information, etc., may be stored in a specific location (e.g., memory) or managed using management tables. Input and output information, etc., may be overwritten, updated, or added. Output information, etc., may be deleted. The input information, etc., may be transmitted to another device.

The determination in the disclosure may be made by a value (0 or 1) represented by 1 bit, by a true or false value (Boolean: true or false), or by comparison of numerical values (e.g., a comparison with a predefined value).

Software should be broadly interpreted to mean, regardless of whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, etc.

Software, instructions, information, etc., may also be transmitted and received via a transmission medium. For example, when software is transmitted from a website, server, or other remote source using at least one of wireline technology (such as coaxial cable, fiber optic cable, twisted pair, digital subscriber line) and wireless technology (infrared, microwave, etc.), at least one of these wireline technology and wireless technology is included within the definition of a transmission medium.

The information, signals, etc., described in this disclosure may be represented using any of a variety of different techniques. For example, data, instructions, commands, information, signals, bits, symbols, chips, etc., which may be referred to throughout the above description may be represented by voltages, currents, electromagnetic waves, magnetic fields or magnetic particles, optical fields or photons, or any combination thereof.

The terms described in this disclosure and those necessary for understanding this disclosure may be replaced by terms having the same or similar meanings. For example, at least one of the channels and the symbols may be a signal (signaling). The signal may also be a message. The component carrier may also be referred to as a carrier frequency, cell, frequency carrier, etc.

As used in this disclosure, the terms "system" and "network" are used interchangeably.

The information, parameters, etc., described in the present disclosure may also be expressed using absolute values, relative values from predetermined values, or they may be expressed using corresponding separate information. For example, radio resources may be those indicated by an index.

The name used for the parameters described above are not restrictive in any respect. In addition, the mathematical equations using these parameters may differ from those explicitly disclosed in this disclosure. Since the various channels (e.g., PUCCH, PDCCH, etc.) and information elements can be identified by any suitable name, the various names assigned to these various channels and information elements are not in any way limiting.

In this disclosure, the terms "Base Station," "Radio Base Station," "Fixed Station," "NodeB," "eNodeB(eNB)," "gNodeB (gNB)," "Access Point," "Transmission Point," "Reception Point," "Transmission/Reception Point," "Cell," "Sector," "Cell Group," "Carrier," "Component Carrier," etc., may be used interchangeably. The base stations may be referred to in terms such as macro-cell, small-cell, femto-cell, pico-cell, etc.

The base station can accommodate one or more (e.g., three) cells. Where the base station accommodates a plurality of cells, the entire coverage area of the base station can be divided into a plurality of smaller areas, each smaller area can also provide communication services by means of a base station subsystem (e.g., an indoor small base station (RRH) or a remote Radio Head). The term "cell" or "sector" refers to a portion or all of the coverage area of at least one of the base station and base station subsystem that provides communication services at the coverage.

In this disclosure, terms such as "mobile station (MS: Mobile Station)", "user terminal", "user equipment (UE: User Equipment)", "terminal", etc., may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of a base station and a mobile station may be referred to as a transmitter, receiver, communication device, etc. At least one of a base station and a mobile station may be a device installed in a mobile body, a mobile body itself, etc. The mobile body may be a vehicle (e.g., a car, an airplane, etc.), an unmanned mobile (e.g., a drone, an automated vehicle, etc.), or a robot (manned or unmanned). At least one of a base station and a mobile station includes a device that does not necessarily move during communication operations. For example, at least one of a base station and a mobile station may be an IoT (Internet of Things) device such as a sensor.

In addition, the base station in the present disclosure may be read by the user terminal. For example, various aspects/embodiments of the present disclosure may be applied to a configuration in which communication between the base stations and the user terminal is replaced with communication between multiple user terminals 20 (e.g., may be referred to as D2D (Device-to-Device), V2X (Vehicle-to-Everything), etc.). In this case, a configuration may be such that the above-described function of the base station 10 is included in the user terminal 20. The terms "up" and "down" may also be replaced with the terms corresponding to terminal-to-terminal communication (e.g., "side"). For example, an uplink channel, a downlink channel, etc., may be replaced with a sidelink channel.

Similarly, the user terminal in the present disclosure may be replaced with the base station. In this case, a configuration may be such that the above-described function of the user terminal may be included in the base station.

The terms "determine (determining)" and "decide (determining)" used in this disclosure may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided. "Determine (decision)" may be read as "assuming," "expected," "considering," etc.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be replaced with "access". As used in the present disclosure, the two elements may be considered as being "connected" or "coupled" to each other using at least one of the one or more wires, cables, and printed electrical connections and, as a number of non-limiting and noninclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standards applied.

As used in this disclosure, the expression "based on" does not mean "based on only" unless otherwise specified. In other words, the expression "based on" means both "based on only" and "at least based on."

Any reference to elements using names, such as "first" and "second," as used in this disclosure does not generally limit the amount or order of those elements. These names can be used in this specification as a convenient way to distinguish between two or more elements. Accordingly, the reference to the first and second elements does not imply that only two elements can be adopted, or that the first element must precede the second element in some way.

The "means" in the configuration of each of the above-described devices may be replaced with "part," "circuit," "device," etc.

As long as "include," "including," and variations thereof are used in this disclosure, the terms are intended to be inclusive in a manner similar to the term "comprising." Furthermore, the term "or" used in the disclosure is intended not to be an exclusive OR.

A radio frame may be formed of one or more frames in the time domain. In the time domain, each of the one or more frames may be referred to as a subframe. A subframe may further be formed of one or more slots in the time domain. A subframe may be a fixed time length (e.g., 1 ms) that does not depend on numerology.

The numerology may be a communication parameter to be applied to at least one of transmission or reception of a signal or a channel. The numerology may represent, for example, at least one of a subcarrier spacing (SCS: SubCarrier Spacing), a bandwidth, a symbol length, a cyclic prefix length, a transmission time interval (TTI: Transmission Time Interval), a symbol number per TTI, a radio frame configuration, a specific filtering process performed by a transceiver in a frequency domain, a specific windowing process performed by a transceiver in a time domain, etc.

A slot may be formed of, in a time domain, one or more symbols (OFDM (Orthogonal Frequency Division Multiplexing) symbols, SC-FDMA (Single Carrier Frequency Division Multiple Access) symbols, etc.). A slot may be a unit of time based on the numerology.

A slot may include a plurality of mini-slots. In a time domain, each mini-slot may be formed of one or more symbols. A mini-slot may also be referred to as a sub-slot. A mini-slot may be formed of fewer symbols than those of a slot. The PDSCH (or PUSCH) transmitted in a unit of time that is greater than a mini-slot may be referred to as PDSCH (or PUSCH) mapping type A. The PDSCH (or PUSCH) transmitted using a mini-slot may be referred to as PDSCH (or PUSCH) mapping type B.

Each of the radio frame, subframe, slot, mini-slot, and symbol represents a time unit for transmitting a signal. The radio frame, subframe, slot, mini-slot, and symbol may be called by respective different names.

For example, one subframe may be referred to as a transmission time interval (TTI: Transmission Time Interval), a plurality of consecutive subframes may be referred to as TTI, or one slot or one mini-slot may be referred to as TTI. Namely, at least one of a subframe and TTI may be a subframe (1 ms) in the existing LTE, may be a time interval shorter than 1 ms (e.g., 1 to 13 symbols), or a time interval longer than 1 ms. Note that the unit representing the TTI may be referred to as a slot, a mini-slot, etc., instead of a subframe.

Here, the TTI refers to, for example, the minimum time unit of scheduling in radio communication. For example, in the LTE system, the base station performs scheduling for allocating radio resources (such as a frequency bandwidth, transmission power, etc., that can be used in each terminal 20) in units of TTIs to each terminal 20. Note that the definition of the TTI is not limited to this.

The TTI may be a transmission time unit, such as a channel coded data packet (transport block), a code block, a codeword, etc., or may be a processing unit for scheduling, link adaptation, etc. Note that, when a TTI is provided, a time interval (e.g., a symbol number) onto which a transport block, a code block, or a code ward is actually mapped may be shorter than the TTI.

Note that, when one slot or one mini-slot is referred to as a TTI, one or more TTIs (i.e., one or more slots or one or more mini-slots) may be the minimum time unit of scheduling. Additionally, the number of slots (the number of mini-slots) forming the minimum time unit of scheduling may be controlled.

A TTI with a time length of 1 ms may be referred to as an ordinary TTI (TTI in LTE Rel. 8-12), a normal TTI, a long TTI, an ordinary subframe, a normal subframe, a long subframe, a slot, etc. A TTI that is shorter than a normal TTI may be referred to as a shortened TTI, a short TTI, a partial TTI (partial TTI or fractional TTI), a shortened subframe, a short subframe, a mini-slot, a sub-slot, a slot, etc.

Note that a long TTI (e.g., a normal TTI, a subframe, etc.) may be replaced with a TTI with a time length exceeding 1 ms, and a short TTI (e.g., a shortened TTI, etc.) may be replaced with a TTI with a TTI length that is shorter than the TTI length of the long TTI and longer than or equal to 1 ms.

A resource block (RB) is a resource allocation unit in the time domain and the frequency domain, and may include one or more consecutive subcarriers in the frequency domain. A number of subcarriers included in a RB may be the same irrespective of numerology, and may be 12, for example. The number of subcarriers included in a RB may be determined based on numerology.

Additionally, the resource block may include one or more symbols in the time domain, and may have a length of one slot, one mini-slot, one subframe, or one TTI. Each of one TTI and one subframe may be formed of one or more resource blocks.

Note that one or more RBs may be referred to as a physical resource block (PRB: Physical RB), a subcarrier group (SCG: Sub-Carrier Group), a resource element group (REG: Resource Element Group), a PRB pair, a RB pair, etc.

Additionally, a resource block may be formed of one or more resource elements (RE: Resource Element). For example, 1 RE may be a radio resource area of 1 subcarrier and 1 symbol.

A bandwidth part (BWP: Bandwidth Part) (which may also be referred to as a partial bandwidth, etc.) may represent, in a certain carrier, a subset of consecutive common RB (common resource blocks) for a certain numerology. Here, the common RB may be specified by an index of a RB when a common reference point of the carrier is used as a reference. A PRB may be defined in a BWP, and may be numbered in the BWP.

The BWP may include a BWP for UL (UL BWP) and a BWP for DL (DL BWP). For a UE, one or more BWPs may be configured within one carrier.

At least one of the configured BWPs may be active, and the UE is may not assume that a predetermined signal/channel is communicated outside the active BWP. Note that "cell," "carrier," etc. in the present disclosure may be replaced with "BWP."

The structures of the above-described radio frame, subframe, slot, mini-slot, symbol, etc., are merely illustrative. For example, the following configurations can be variously changed: the number of subframes included in the radio frame; the number of slots per subframe or radio frame; the number of mini-slots included in the slot; the number of symbols and RBs included in the slot or mini-slot; the number of subcarriers included in the RB; and the number of symbols, the symbol length, the cyclic prefix (CP: Cyclic Prefix) length, etc., within the TTI.

In the present disclosure, for example, if an article is added by translation, such as a, an, and the in English, the present disclosure may include that the noun following the article is plural.

In the present disclosure, the term "A and B are different" may imply that "A and B are different from each other." Note that the term may also imply "each of A and B is different from C." The terms, such as "separated," "coupled," etc., may also be interpreted similarly.

The aspects/embodiments described in this disclosure may be used alone, in combination, or switched with implementation. Notification of predetermined information (e.g. "X" notice) is not limited to a method that is explicitly performed, and may also be made implicitly (e.g. "no notice of the predetermined information").

Note that, in the present disclosure, SIB1 is an example of system information. The "ServingCellConfigCommonSIB" is an example of a configuration common for cells. The "uplinkConfigCommon" is an example of a configuration common for uplink.

While the present disclosure is described in detail above, those skilled in the art will appreciate that the present disclosure is not limited to the embodiments described in the present disclosure. The disclosure may be implemented as modifications and variations without departing from the gist and scope of the disclosure as defined by the claims. Accordingly, the description of the present disclosure is for illustrative purposes only and is not intended to have any restrictive meaning with respect to the present disclosure.

This international patent application is based on and claims priority to Japanese Patent Application No. 2020-076914 filed on April 23, 2020, and the entire content of Japanese Patent Application No. 2020-076914 is incorporated herein by reference.

### LIST OF REFERENCE SYMBOLS

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a receiving unit that receives system information from a cell;
a control unit that acquires a common configuration for the cell and a common configuration for uplink that are included in the system information; and
a transmitting unit that performs uplink transmission in the cell by applying the common configuration for the cell and the common configuration for the uplink to the uplink transmission,
wherein, in a case where the cell supports a standalone operation, the control unit assumes that the common configuration for the cell and the common configuration for the uplink are mandatory fields.

2. The terminal according to claim 1, wherein, in a case where the cell supports the standalone operation and where the control unit is unable to acquire, from the system information, at least one of the common configuration for the cell and the common configuration for the uplink, the control unit assumes that connection to the cell is barred.

3. The terminal according to claim 1, wherein, in a case where the cell supports the standalone operation and where the control unit acquires, from the system information, the common configuration for the cell and the common configuration for the uplink, the control unit stores the system information and executes a configuration process, based on the system information.

4. The terminal according to claim 1, wherein, in a case where the cell does not support the standalone operation, the control unit assumes that the common configuration for the cell and the common configuration for the uplink are optional fields.

5. A communication method executed by a terminal, the communication method comprising:
receiving system information from a cell;
acquiring a common configuration for the cell and a common configuration for uplink that are included in the system information; and
transmitting uplink transmission in the cell by applying the common configuration for the cell and the common configuration for the uplink to the uplink transmission,
wherein, in a case where the cell supports a standalone operation, the acquiring assumes that the common configuration for the cell and the common configuration for the uplink are mandatory fields.
